# EUROPEAN PATENT APPLICATION

(11) **EP 4 607 648 A1**
(43) Date of publication of application: **27.08.2025**
(21) Application number: 24774097.0
(22) Date of filing: 19.03.2024
(51) Int. Cl.: H01M 10/0567, H01M 4/36

(54) **ELECTROLYTE, BATTERY AND ELECTRIC DEVICE**

(30) Priority: 20.03.2023 CN 202310273058
(71) Applicant: Contemporary Amperex Technology (Hong Kong) Limited, Hong Kong (HK)
(72) Inventor: WANG, Hansen, Ningde, Fujian 352100 (CN); LIU, Chengyong, Ningde, Fujian 352100 (CN); WAN, Pan, Ningde, Fujian 352100 (CN); FENG, Fuxiang, Ningde, Fujian 352100 (CN); ZHANG, Rupeng, Ningde, Fujian 352100 (CN); HUANG, Shengyuan, Ningde, Fujian 352100 (CN)
(74) Representative: Kraus & Lederer PartGmbB
(86) International application number: PCT/CN2024/082362
(87) International publication number: WO 2024/193532

(57) **Abstract**

Provided are an electrolyte, a battery, and a power-consuming device. The electrolyte is applicable to a lithium metal secondary battery. The electrolyte includes a lithium salt and a solvent. The solvent includes an epoxy compound substituted with a fluoroalkyl chain. Therefore, the use of the electrolyte including the epoxy compound substituted with the fluoroalkyl chain can improve cycle stability on both a positive electrode side and a negative electrode side of the battery, prolonging a cycle life of the battery.

## Description

### CROSS-REFERENCE TO RELATED APPLICATIONS

This application claims priority to Patent Application No. 202310273058.2, filed with the China National Intellectual Property Administration on March 20, 2023, which is incorporated herein by reference in its entirety.

### TECHNICAL FIELD

This application relates to the field of secondary batteries, and specifically, to an electrolyte, a battery, and a power-consuming device.

### BACKGROUND

Lithium batteries are not only used in energy storage power systems such as hydroelectric power plants, thermal power plants, wind power plants, and solar power plants, but also widely used in electric transportation means such as electric bicycles, electric motorcycles, and electric vehicles, as well as in military equipment, aerospace, and many other fields. At present, with the development of society, people have increasing requirements for safety of lithium batteries. However, discharge capacity of a battery after a plurality of cycles decreases significantly, affecting a lifespan of the battery.

### SUMMARY

In view of the technical problem existing in the background, this application provides an electrolyte, to prolong a cycle life of a battery.

To achieve the foregoing objective, a first aspect of this application provides an electrolyte applicable to a lithium metal secondary battery. The electrolyte includes a lithium salt and a solvent. The solvent includes an epoxy compound substituted with a fluoroalkyl chain.

Compared with the related art, this application includes at least the following beneficial effects: The use of the electrolyte including the epoxy compound substituted with the fluoroalkyl chain in this application can improve cycle stability on both a positive electrode side and a negative electrode side of the battery, prolonging a cycle life of the battery.

In some implementations of this application, the epoxy compound substituted with the fluoroalkyl chain includes at least one of molecules of structures shown in formula I to formula VII: 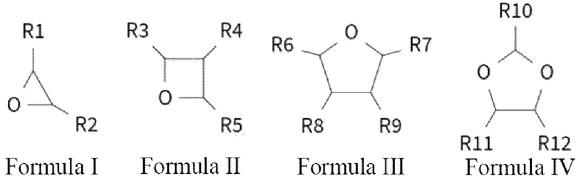 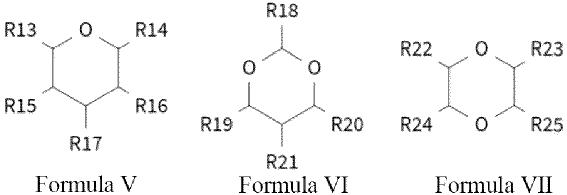 where R1 to R25 are each independently a hydrogen atom or a fluoroalkyl group containing 1 to 10 carbon atoms, and at least one ofR1 to R25 is a fluoroalkyl group containing 1 to 10 carbon atoms. Therefore, the foregoing substance correspondingly increase ionic conductivity of the prepared electrolyte, which can prolong a lifespan of the battery.

In some implementations of this application, a number of carbon atoms in the fluoroalkyl chain in the epoxy compound substituted with the fluoroalkyl chain is not greater than 7. Therefore, it can be ensured that substitution with fluorine atoms can be maximized without affecting a capability of dissolving the lithium salt, improving oxidation resistance of the electrolyte and promoting production of inorganic fluorine-rich SEI, thereby prolonging a lifespan of the battery.

In some implementations of this application, in the epoxy compound substituted with the fluoroalkyl chain, a number of fluorine atoms in the fluoroalkyl chain is m, and a number of hydrogen atoms in the fluoroalkyl chain is n, m/(m + n) ≥ 50%. Therefore, this degree of substitution with the fluorine atoms improves a coordination capability of oxygen atoms to lithium ions, and ionic conductivity of the prepared electrolyte is increased correspondingly, which can prolong a lifespan of the battery.

In some implementations of this application, the epoxy compound in the epoxy compound substituted with the fluoroalkyl chain is a three-membered ring, a four-membered ring, a five-membered ring, or a six-membered ring. Therefore, this type of ring structure provides a good effect and oxidation resistance for dense deposition of the lithium metal, thereby prolonging a lifespan of the battery.

In some implementations of this application, the epoxy compound substituted with the fluoroalkyl chain includes at least one of molecules of structures shown in formula A-1 to formula A-16:

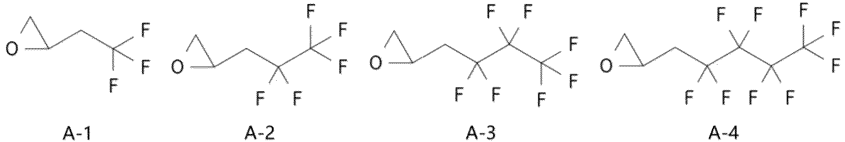

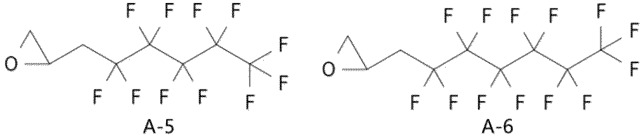

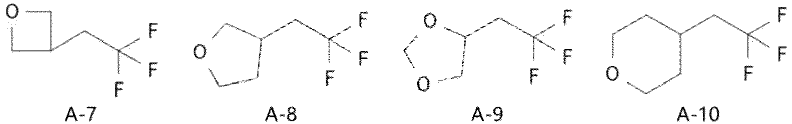

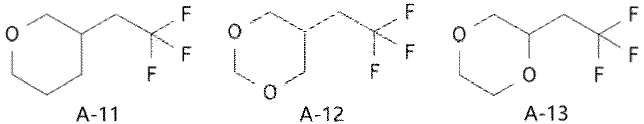

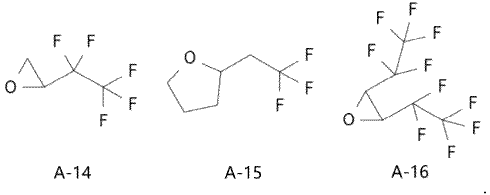

Therefore, the use of the electrolyte including the epoxy compound substituted with the fluoroalkyl chain in this application can improve cycle stability on both a positive electrode side and a negative electrode side of the battery, prolonging a cycle life.

In some implementations of this application, the epoxy compound substituted with the fluoroalkyl chain includes at least one of molecules of structures shown in the following formulas:

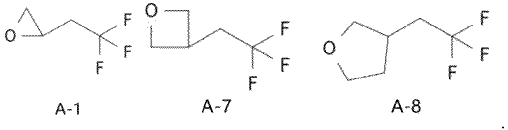

Therefore, the foregoing three substances A-1, A-7, and A-8 provide good affinity for lithium ions, which can maintain high ionic conductivity of the electrolyte, and help form a structure that promotes solvation of dense deposits of the lithium metal, thereby prolonging a lifespan of the battery.

In some implementations of this application, a percentage by mass of the epoxy compound substituted with the fluoroalkyl chain in the electrolyte is a, 20% ≤ a ≤ 100%, optionally 40% ≤ a ≤ 80%. Therefore, the foregoing percentage by mass can improve stability of positive and negative electrodes while ensuring good ionic conductivity of the electrolyte, prolonging a lifespan of the battery.

In some implementations of this application, the electrolyte further includes at least one of a co-solvent, a secondary solvent, a lithium salt, and an additive. Therefore, coordination between the epoxy compound substituted with the fluoroalkyl chain in this application and at least one of the co-solvent, the secondary solvent, the lithium salt, and the additive greatly improves a cycle life of the battery.

In some implementations of this application, the electrolyte further includes a co-solvent, and the co-solvent includes at least one of carboxylate, carbonate, monoether, diol ether, acetal ether, cyclic ether, fluoroester, and fluoroether. Therefore, the use of the foregoing co-solvent in this application can help dissolve the lithium salt, maintaining good ionic conductivity of the electrolyte. In addition, the use of the foregoing co-solvent in this application can greatly improve a cycle life of the battery.

In some implementations of this application, the fluoroester includes at least one of fluoroethylene carbonate, difluoroethylene carbonate, methyl trifluoroethyl carbonate, ethyl trifluoroethyl carbonate, bis(2,2,2-trifluoroethyl) carbonate, methyl 2,2,2-trifluoroacetate, and ethyl 2,2,2-trifluoroacetate. The use of the foregoing fluoroester helps dissolve the lithium salt in the electrolyte, prolonging a lifespan of the battery.

In some implementations of this application, the fluoroether includes at least one of molecules of structures shown in formula B-1 to formula B-30:

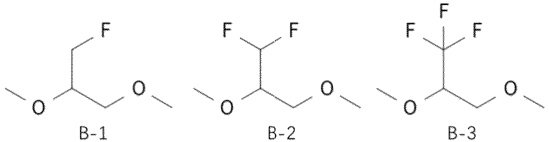

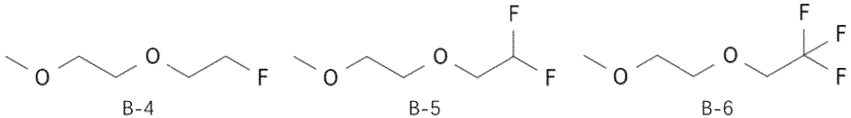

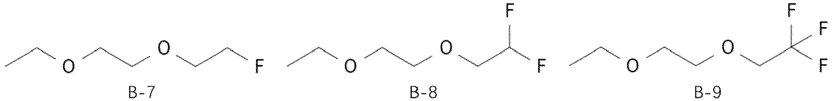

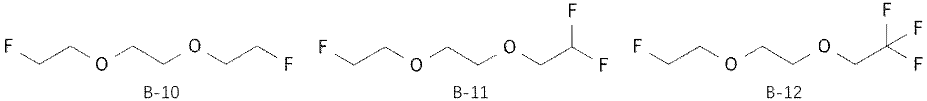

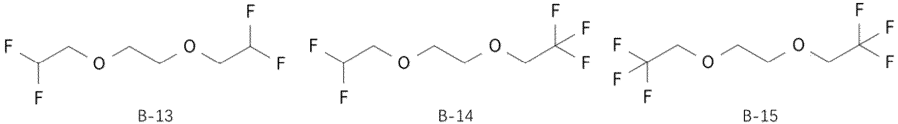

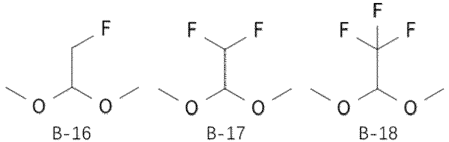

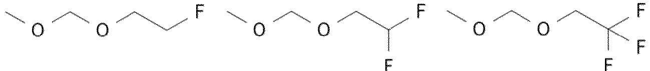

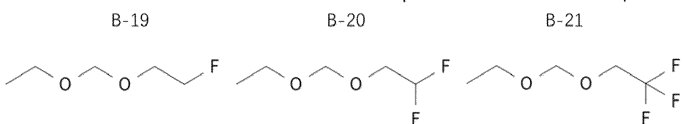

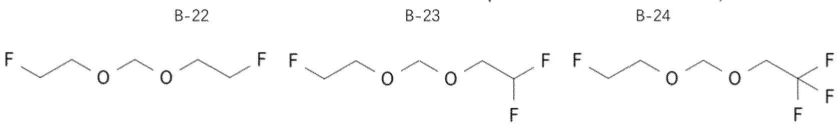

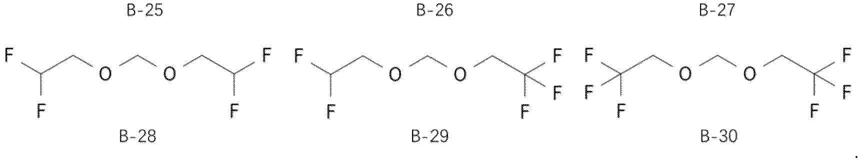

The use of the foregoing fluoroether helps dissolve the lithium salt in the electrolyte, prolonging a lifespan of the battery.

In some implementations of this application, the co-solvent includes at least one of dimethoxypropane, diethoxyethane,

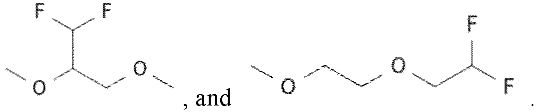

Therefore, the foregoing three substances can maintain good stability of positive and negative electrodes while helping well dissolve the lithium salt, further prolonging a lifespan of the battery.

In some implementations of this application, the electrolyte further includes a co-solvent, and a percentage by mass of the co-solvent in the electrolyte is b, 0% ≤ b ≤ 40%, optionally 10% ≤ b ≤ 30%. The use of the co-solvent in the foregoing mass fraction can avoid a significant negative impact on stability of positive and negative electrodes while helping dissolve the lithium salt, which helps prolong a lifespan of the battery.

In some implementations of this application, the electrolyte further includes a secondary solvent, and the secondary solvent includes at least one of fluoroether, a fluoroaryl solvent, and fluoroalkane. Therefore, the addition of the secondary solvent further reduces deposition of the lithium metal and improves cycle reversibility. In this way, the addition of the secondary solvent to the electrolyte can achieve a synergistic effect for further improving reversibility of positive and negative electrodes, prolonging a lifespan of the battery.

In some implementations of this application, the electrolyte further includes a secondary solvent, and the secondary solvent includes at least one of fluorobenzene, p-difluorobenzene, m-difluorobenzene, o-difluorobenzene, trifluorotoluene, trifluoromethoxybenzene, decafluoropentane, 1,1,2,2-tetrafluoroethyl-2,2,3,3-tetrafluoropropylether, 1,2-bis(1,1,2,2-tetrafluoroethoxy)ethane, bis(2,2,2-trifluoroethyl) ether, 1,1,2,3,3,3-hexafluoropropyl ethyl ether, 1H,1H,5H-octafluoropentyl-1,1,2,2-tetrafluoroethyl ether, ethyl trifluoromethyl ether, difluoromethyl-2,2,3,3,3-pentafluoropropyl ether, heptafluoropropyl-1,2,2,2-tetrafluoroethyl ether, difluoromethyl 2,2,3,3-tetrafluoropropyl ether, perfluoroisopropyl methyl ether, 1,1,2,2-tetrafluoroethyl-2,2,2-trifluoroethyl ether, ethyl-1,1,2,2-tetrafluoroethyl ether, ethyl-2,2,2-tetrafluoroethyl ether, and bis(1,1,2,2-tetrafluoroethyl) ether. Therefore, the foregoing substances have a high content of fluorine element, which can further improve a synergistic effect for reversibility of positive and negative electrodes, prolonging a lifespan of the battery.

In some implementations of this application, the electrolyte further includes a secondary solvent, and the secondary solvent includes at least one of 1, 1,2,2-tetrafluoroethyl-2,2,3,3-tetrafluoropropylether and 1,2-bis(1,1,2,2-tetrafluoroethoxy)ethane. Therefore, a synergistic effect for reversibility of positive and negative electrodes can be further improved, prolonging a lifespan of the battery.

In some implementations of this application, the electrolyte further includes a secondary solvent, and a percentage by mass of the secondary solvent in the electrolyte is c, 0% ≤ c ≤ 40%, optionally 10% ≤ c ≤ 30%. The use of the secondary solvent in the foregoing mass fraction can avoid a negative impact on lithium salt dissolution and ion transport while fully implementing functions of oxidation resistance and film formation, prolonging a lifespan of the battery.

In some implementations of this application, the electrolyte further includes a lithium salt, and the lithium salt includes at least one of lithium bis(fluorosulfonyl)imide, lithium hexafluorophosphate, lithium tetrafluoroborate, lithium hexafluoroarsenate, lithium bis(trifluoromethanesulfonyl)imide, lithium trifluoromethanesulfonate, lithium difluorophosphate, lithium bis(oxalate)borate, lithium difluoro(oxalato)borate, lithium difluorobis(oxalato)phosphate, and lithium tetrafluoro(oxalato)phosphate. Therefore, the foregoing lithium salts can support cycling at a high voltage, prolonging a lifespan of the battery. In some embodiments, the lithium salt includes lithium bis(fluorosulfonyl)imide.

In some implementations of this application, the electrolyte further includes a lithium salt, and a molar concentration of the lithium salt in the electrolyte is m, 0.5 M ≤ m ≤ 4 M, optionally 0.8 M ≤ m ≤ 2.4 M. Therefore, the concentration of the lithium salt within the foregoing range is neither excessively high to affect ion transport performance of the electrolyte, nor excessively low to affect stability of positive and negative electrodes by the electrolyte, which helps prolong a lifespan of the battery.

In some implementations of this application, the electrolyte further includes an additive, and the additive includes at least one of propanesultone, vinyl sulfate, vinyl sulfite, tris(trimethylsilane)phosphate, tris(trimethylsilane)phosphite, tris(trifluoroethyl)phosphate, tris(trifluoroethyl)phosphite, tris(trimethylsilane)borate, dimethylmaleic anhydride, and 1,4-diisocyanatobutane. Therefore, the foregoing additive mainly helps film formation, and further helps improve stability of positive and negative electrodes of the battery, prolonging a lifespan of the battery.

In some implementations of this application, the electrolyte further includes a co-solvent, a secondary solvent, a lithium salt, and an additive, and in the electrolyte, a sum of a mass of the epoxy compound substituted with the fluoroalkyl chain, a mass of the co-solvent, a mass of the secondary solvent, and a mass of the lithium salt is x, and a mass of the additive is y, d = y/x, 0% ≤ d ≤ 5%, optionally 0.5% ≤ d ≤ 3%. Therefore, this helps film formation, and further helps improve stability of positive and negative electrodes of the battery, prolonging a lifespan of the battery.

A second aspect of this application provides a battery, including the electrolyte according to the first aspect of this application. Therefore, the battery has a long lifespan.

A third aspect of this application provides a power-consuming device, including the battery according to the second aspect, where the battery is configured to provide electric energy. Therefore, the power-consuming device has a long lifespan.

Some of the additional aspects and advantages of the present invention are given in the following description, and some become apparent from the following description or are learned through practice of the present invention.

### BRIEF DESCRIPTION OF THE DRAWINGS

Various other advantages and benefits become apparent to a person of ordinary skill in the art upon reading the following detailed description of preferred implementations. The accompanying drawings are merely used for illustrating the preferred implementations and are not intended to constitute a limitation on this application. In addition, in all the accompanying drawings, same parts are indicated by same reference numerals. In the accompanying drawings:
FIG. 1 is a schematic diagram of a structure of a battery according to an implementation of this application;
FIG. 2 is a schematic diagram of a structure of a battery module according to an implementation of this application;
FIG. 3 is a schematic diagram of a structure of a battery pack according to an implementation of this application;
FIG. 4 is an exploded view of FIG. 3; and
FIG. 5 is a schematic diagram of an implementation of a power-consuming device using a battery as a power source.

### Reference numerals:

1: Secondary battery; 2: Battery module; 3: Battery pack; 4: Upper box body; 5: Lower box body.

### DETAILED DESCRIPTION

Embodiments of the technical solutions of this application are described in detail below. The following embodiments are only used to illustrate the technical solutions of this application more clearly, and are thus only used as examples, but are not used to limit the protection scope of this application.

The "embodiment" mentioned in this specification means that particular features, structures, or characteristics described with reference to the embodiment may be included in at least one embodiment of this application. The occurrence of the phrase at various locations in this specification does not necessarily all refer to the same embodiment, nor is it a separate or alternative embodiment that is mutually exclusive of other embodiments. A person skilled in the art explicitly or implicitly understands that the embodiments described in this specification may be combined with other embodiments.

For brevity, only some numerical ranges are specifically disclosed herein. However, any lower limit may be combined with any upper limit to form a range that is not clearly recorded; and any lower limit may be combined with another lower limit to form a range that is not clearly recorded. Similarly, any upper limit may be combined with any other upper limit to form a range that is not clearly recorded. In addition, each separately disclosed point or single numerical value may be used as a lower limit or an upper limit to be combined with any other point or single numerical value or with any other lower limit or upper limit to form a range that is not clearly recorded.

In the description of the embodiments of this application, the term "and/or" describes only an association relationship between associated objects and indicates that three relationships may exist. For example, A and/or B may indicate the following three cases: Only A exists, both A and B exist, and only B exists. In addition, the character "/" in this specification usually indicates an "or" relationship between the associated objects.

Unless otherwise defined, all technical and scientific terms used in this specification have the same meaning as would normally be understood by a person skilled in the art of this application. The terms used in this specification are only for describing the specific embodiments, but are not intended to limit this application. In the specification, claims, and brief description of the drawings in this application, the terms "include", "have", and any variant thereof are intended to cover a non-exclusive inclusion.

Nowadays, from the perspective of development of the market situation, lithium batteries are used increasingly. Lithium batteries are not only used in energy storage power systems such as hydroelectric power plants, thermal power plants, wind power plants, and solar power plants, but also widely used in electric transportation such as electric bicycles, electric motorcycles, and electric vehicles, as well as in military equipment, aerospace, and many other fields. With continuous expansion of application fields of power batteries, the market demand for the power batteries is also expanding.

In a cycle process of a lithium battery, an interface side reaction causes irreversible consumption of lithium ions, reducing utilization of lithium ions, and non-uniform deposition causes huge volume expansion, severely threatening a cycle life of the lithium battery.

In an existing electrolyte of a lithium battery, ether molecules are used as a primary solvent, with oxidation resistance lower than an ester solvent, which may cause cell failure and other problems due to oxidative decomposition on a positive electrode side after long-term cycling. Therefore, a further improvement on a design of the electrolyte of the lithium battery to allow both a lithium metal negative electrode and a positive electrode to be in long-term stable cycles is a key to further prolong a lifespan of the lithium battery.

Therefore, a first aspect of this application provides an electrolyte applicable to a lithium metal secondary battery. The electrolyte includes a lithium salt and a solvent. The solvent includes an epoxy compound substituted with a fluoroalkyl chain.

Compared with the related art, this application includes at least the following beneficial effects: The epoxy compound is substituted with the fluoroalkyl chain. In this way, oxidation resistance of the epoxy compound molecules is significantly improved due to strong electronegative of fluorine atoms, so that the electrolyte with the epoxy compound substituted with the fluoroalkyl chain as the solvent can match a positive electrode of 4 V or more and maintain good cycle performance. In addition, the fluoroalkyl chain can decompose during lithium deposition into a film, to form an inorganic highly-fluorine-rich SEI component on a surface of a negative electrode, promoting cycle reversibility of the negative electrode. Therefore, the use of the electrolyte including the epoxy compound substituted with the fluoroalkyl chain in this application can improve cycle stability on both a positive electrode side and a negative electrode side of the battery, prolonging a cycle life of the battery.

Without being limited to any theory, it is found through research that the use of the epoxy compound substituted with the fluoroalkyl chain in this application can significantly improve oxidation resistance of the electrolyte at a high voltage and reduce induction of lithium dense deposition while maintaining good solubility of the lithium salt and good miscibility of another solvent.

In some implementations of this application, the epoxy compound substituted with the fluoroalkyl chain includes at least one of molecules of structures shown in formula I to formula VII: 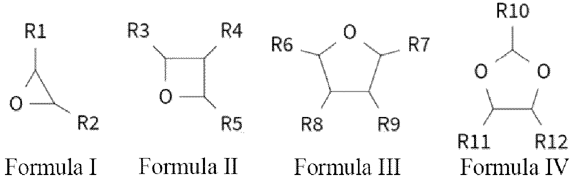 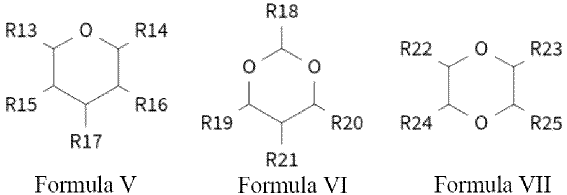 where R1 to R25 are each independently a hydrogen atom or a fluoroalkyl group containing 1 to 10 carbon atoms, and at least one of R1 to R25 is a fluoroalkyl group containing 1 to 10 carbon atoms. Therefore, the foregoing substance has a three- to six-membered ring, which improves a coordination capability of oxygen atoms to lithium ions, and ionic conductivity of the prepared electrolyte is increased correspondingly, which can prolong a lifespan of the battery.

In some implementations of this application, a number of carbon atoms in the fluoroalkyl chain in the epoxy compound substituted with the fluoroalkyl chain is not greater than 7. Therefore, it can be ensured that substitution with fluorine atoms can be maximized without affecting a capability of dissolving the lithium salt, improving oxidation resistance of the electrolyte and promoting production of inorganic fluorine-rich SEI, thereby prolonging a lifespan of the battery.

In some implementations of this application, in the epoxy compound substituted with the fluoroalkyl chain, a number of fluorine atoms in the fluoroalkyl chain is m, and a number of hydrogen atoms in the fluoroalkyl chain is n, m/(m + n) ≥ 50%, which may be, for example, 50% to 100%, 55% to 95%, 60% to 90%, 65% to 85%, 70% to 80%, or 75% to 80%. Therefore, this degree of substitution with the fluorine atoms is sufficient to improve oxidation resistance and promote production of a fluorine-rich component, which can prolong a lifespan of the battery.

In some implementations of this application, the epoxy compound in the epoxy compound substituted with the fluoroalkyl chain is a three-membered ring, a four-membered ring, a five-membered ring, or a six-membered ring. Therefore, this type of ring structure provides a good effect on dense deposition of the lithium metal, and also has specific advantages over a chain ether structure in terms of oxidation resistance. Based on this, the substitution with fluoroalkyl introduces a large quantity of strong electron-withdrawing, further prolonging a lifespan of the battery.

In some implementations of this application, the epoxy compound A (A for short below) substituted with the fluoroalkyl chain is substituted with only one fluoroalkyl chain. In this case, a dissociation capability of A for the lithium salt is not affected. Further, the first carbon atom that is on the fluoroalkyl chain and that is directly linked to the ring is not substituted with fluorine, further prolonging a lifespan of the battery. In addition, based on this, all hydrogen atoms on other carbon atoms of the fluoroalkyl chain are substituted with fluorine. Therefore, without affecting a capability of dissolving the lithium salt, oxidation resistance of the electrolyte is improved, and production of inorganic fluorine-rich SEI is promoted.

In some implementations of this application, the epoxy compound substituted with the fluoroalkyl chain includes at least one of molecules of structures shown in formula A-1 to formula A-16:

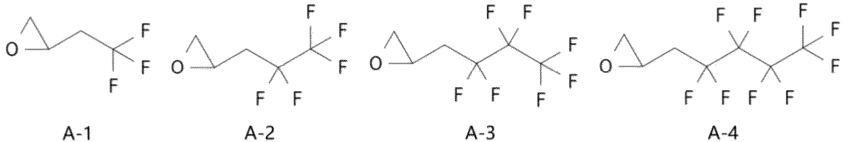

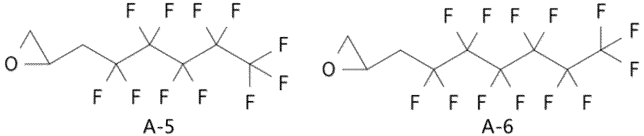

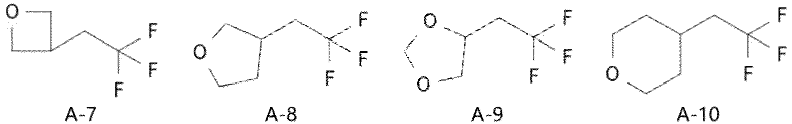

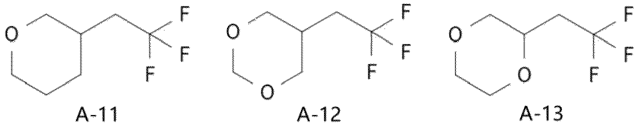

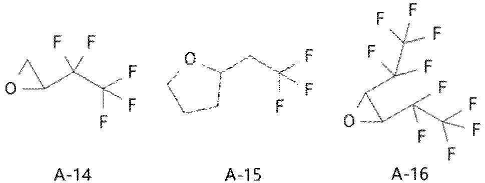

Therefore, the use of the electrolyte including the epoxy compound substituted with the fluoroalkyl chain in this application can improve cycle stability on both a positive electrode side and a negative electrode side of the battery, prolonging a cycle life.

First, the molecules of the structures shown in formula A-1 to formula A-16 are based on a carbon-oxygen three- to six-membered ring. This type of ring structure provides a good effect on dense deposition of the lithium metal, and also has specific advantages over a chain ether structure in terms of oxidation resistance. Based on this, the substitution with fluoroalkyl introduces a large quantity of strong electron-withdrawing and highly electronegative fluorine atoms, which can further inhibit oxidative decomposition of this type of structure at a high voltage, thereby improving oxidation resistance of the electrolyte and matching with a positive electrode of 4 V or more. In addition, the introduction of a large quantity of fluorine atoms can further promote decomposition of this type of structure during deposition of the lithium metal and formation of a highly-fluorine-rich SEI component, reducing deposition of the lithium metal, and improving cycle reversibility of the lithium metal. Therefore, the use of the electrolyte including the epoxy compound A substituted with the fluoroalkyl chain involved in this application can improve cycle stability on both a positive electrode side and a negative electrode side of the lithium battery, prolonging a cycle life.

In some implementations of this application, the epoxy compound substituted with the fluoroalkyl chain includes at least one of molecules of structures shown in the following formulas:

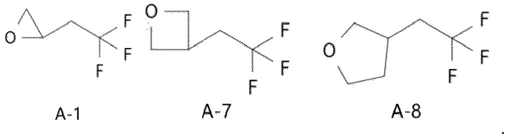

Therefore, the foregoing three substances A-1, A-7, and A-8 have appropriate positions for substitution with alkyl chains, appropriate numbers of alkyl chains, and appropriate lengths of alkyl chains, and a single-oxygen three-membered ring, a single-oxygen four-membered ring, and a single-oxygen five-membered ring provide good affinity for lithium ions, which maintains high ionic conductivity of the electrolyte, and helps form a structure that promotes solvation of dense deposits of the lithium metal, thereby prolonging a lifespan of the battery.

In some implementations of this application, a percentage by mass of the epoxy compound substituted with the fluoroalkyl chain in the electrolyte is a, 20% ≤ a ≤ 100%, for example, 25% ≤ a ≤ 95%, 30% ≤ a ≤ 90%, 35% ≤ a ≤ 85%, 40% ≤ a ≤ 80%, 45% ≤ a ≤ 75%, 50% ≤ a ≤ 70%, 55% ≤ a ≤ 65%, or 60% ≤ a ≤ 63%. Therefore, in the electrolyte, the epoxy compound substituted with the fluoroalkyl chain in the foregoing percentage by mass can be used as a primary solvent, which can improve stability of positive and negative electrodes while ensuring good ionic conductivity of the electrolyte, prolonging a lifespan of the battery. In some other implementations, 40% ≤ a ≤ 80%.

In some implementations of this application, the electrolyte further includes at least one of a co-solvent, a secondary solvent, a lithium salt, and an additive. Therefore, the co-solvent can further improve ion transport performance of the electrolyte; the secondary solvent promotes participation of inorganic fluoride in SEI formation, improves cycle efficiency of the lithium metal, and further ensures high oxidation resistance of the electrolyte; and the additive can help film formation and improve cycling. Coordination between the epoxy compound substituted with the fluoroalkyl chain in this application and at least one of the co-solvent, the secondary solvent, the lithium salt, and the additive greatly improves a cycle life of the battery.

In some implementations of this application, the electrolyte further includes a co-solvent, and the co-solvent includes at least one of carboxylate, carbonate, monoether, diol ether, acetal ether, cyclic ether, fluoroester, and fluoroether. Therefore, the use of the foregoing co-solvent in this application can improve dissolution of the lithium salt, maintaining good ionic conductivity of the electrolyte. In addition, this type of co-solvent has good stability for both a negative electrode and a positive electrode of the lithium battery. Therefore, the use of the foregoing co-solvent in this application can greatly improve a cycle life of the battery.

In some implementations of this application, the carbonate includes at least one of ethylene carbonate, dimethyl carbonate, diethyl carbonate, methyl ethyl carbonate, vinylene carbonate, and propylene carbonate; and the carboxylate includes at least one of methyl formate, ethyl formate, propyl formate, methyl acetate, ethyl acetate, propyl acetate, methyl propionate, ethyl propionate, and propyl propionate. The use of at least one of the foregoing carbonate and carboxylate helps dissolve the lithium salt in the electrolyte, prolonging a lifespan of the battery.

In some implementations of this application, the monoether may include at least one of methyl ether, ethyl ether, propyl ether, butyl ether, methyl ethyl ether, methyl propyl ether, methyl butyl ether, ethyl propyl ether, ethyl butyl ether, and propyl butyl ether; the acetal ether may include at least one of dimethoxymethane, diethoxymethane, and dipropoxymethane; the diol ether may include at least one of dimethoxyethane, dimethoxypropane, diethoxyethane, ethylene glycol ethyl methyl ether, diethylene glycol dimethyl ether, triethylene glycol dimethyl ether, and tetraethylene glycol dimethyl ether; and the cyclic ether may include at least one of tetrahydrofuran, 1,3-dioxolane, tetrahydropyran, 1,3-dioxane, and 1,4-dioxane. The use of the foregoing ether helps dissolve the lithium salt in the electrolyte, prolonging a lifespan of the battery.

In some implementations of this application, the fluoroester may include at least one of fluoroethylene carbonate, difluoroethylene carbonate, methyl trifluoroethyl carbonate, ethyl trifluoroethyl carbonate, bis(2,2,2-trifluoroethyl) carbonate, methyl 2,2,2-trifluoroacetate, and ethyl 2,2,2-trifluoroacetate. The use of the foregoing fluoroester helps dissolve the lithium salt in the electrolyte, prolonging a lifespan of the battery.

In some implementations of this application, the fluoroether may include at least one of molecules of structures shown in formula B-1 to formula B-30:

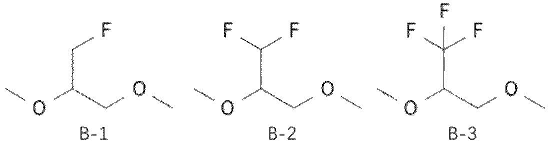

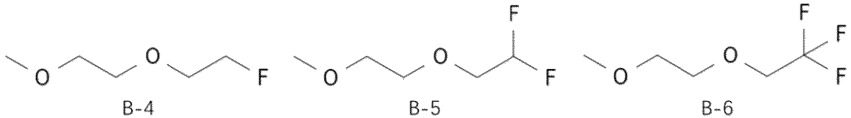

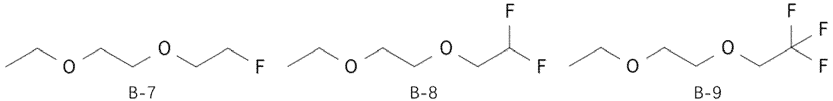

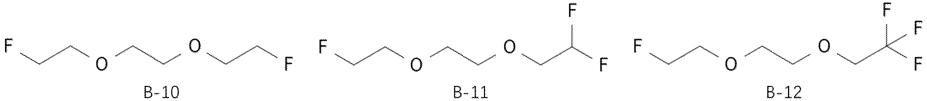

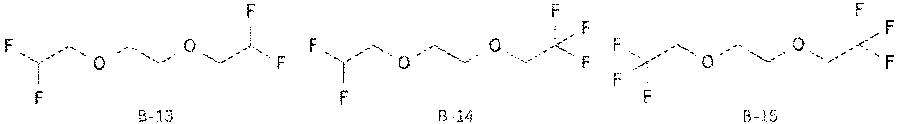

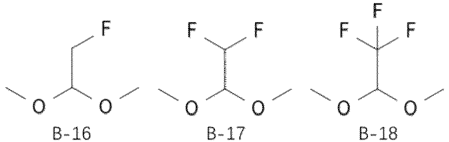

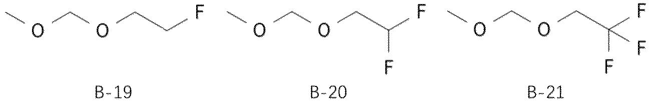

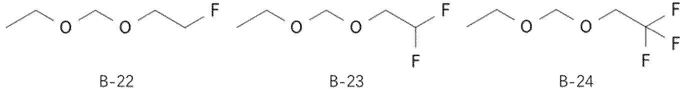

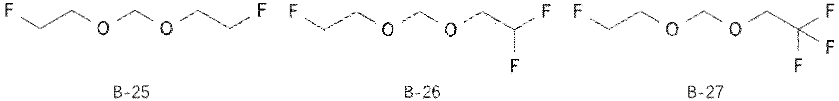

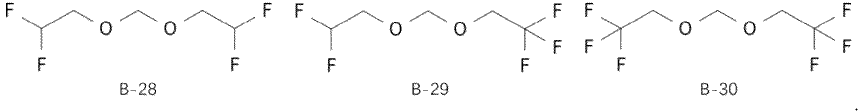

The use of the foregoing fluoroether helps dissolve the lithium salt in the electrolyte, prolonging a lifespan of the battery.

In some implementations of this application, the co-solvent includes at least one of dimethoxypropane, diethoxyethane,

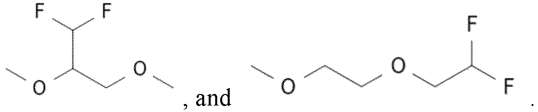

Therefore, the foregoing three substances can maintain good stability of positive and negative electrodes while helping well dissolve the lithium salt, further prolonging a lifespan of the battery.

In some implementations of this application, the electrolyte further includes a co-solvent B (B for short below), and a percentage by mass of the co-solvent in the electrolyte is b, 0% ≤ b ≤ 40%, which may be, for example, 0% ≤ b ≤ 38%, 5% ≤ b ≤ 35%, 10% ≤ b ≤ 30%, 15% ≤ b ≤ 25%, or 20% ≤ b ≤ 23%, optionally 10% ≤ b ≤ 30%. In some embodiments, b is 20%. The use of the co-solvent in the foregoing mass fraction can avoid a significant negative impact on stability of positive and negative electrodes while helping dissolve the lithium salt, which helps prolong a lifespan of the battery.

In some implementations of this application, the electrolyte further includes a secondary solvent C (C for short below), and the secondary solvent includes at least one of fluoroether, a fluoroaryl solvent, and fluoroalkane. Therefore, the secondary solvent serves to be well mixed with the epoxy compound A substituted with the fluoroalkyl chain and the co-solvent B. In an aspect, the substitution with fluorine improves oxidation resistance, and the addition of the secondary solvent helps further improve stability of a positive electrode of 4 V or more in the electrolyte. In another aspect, the substitution with fluorine can cause decomposition during deposition of the lithium metal to form a fluorine-rich SEI component, and the addition of the secondary solvent further reduces deposition of the lithium metal and improves cycle reversibility. In this way, the addition of the secondary solvent to the electrolyte can achieve a synergistic effect for further improving reversibility of positive and negative electrodes, prolonging a lifespan of the battery.

In some implementations of this application, the secondary solvent C includes at least one of fluorobenzene, p-difluorobenzene, m-difluorobenzene, o-difluorobenzene, trifluorotoluene, trifluoromethoxybenzene, decafluoropentane, 1,1,2,2-tetrafluoroethyl-2,2,3,3-tetrafluoropropylether, 1,2-bis(1,1,2,2-tetrafluoroethoxy)ethane, bis(2,2,2-trifluoroethyl) ether, 1,1,2,3,3,3-hexafluoropropyl ethyl ether, 1H,1H,5H-octafluoropentyl-1,1,2,2-tetrafluoroethyl ether, ethyl trifluoromethyl ether, difluoromethyl-2,2,3,3,3-pentafluoropropyl ether, heptafluoropropyl-1,2,2,2-tetrafluoroethyl ether, difluoromethyl 2,2,3,3-tetrafluoropropyl ether, perfluoroisopropyl methyl ether, 1,1,2,2-tetrafluoroethyl-2,2,2-trifluoroethyl ether, ethyl-1,1,2,2-tetrafluoroethyl ether, ethyl-2,2,2-tetrafluoroethyl ether, and bis(1,1,2,2-tetrafluoroethyl) ether. Therefore, the foregoing substances have a high content of fluorine element, which can further improve a synergistic effect for reversibility of positive and negative electrodes, prolonging a lifespan of the battery.

In some implementations of this application, the secondary solvent includes at least one of 1,1,2,2-tetrafluoroethyl-2,2,3,3-tetrafluoropropylether (C-1) and 1,2-bis(1,1,2,2-tetrafluoroethoxy)ethane (C-2). Therefore, the foregoing substances have good compatibility with the epoxy compound substituted with the fluoroalkyl chain, the co-solvent B, and other substances in the electrolyte, and have excellent capabilities of resistance to a high voltage and promoting production of a fluorine-rich component, which can further improve a synergistic effect for reversibility of positive and negative electrodes, prolonging a lifespan of the battery.

In some implementations of this application, a percentage by mass of the secondary solvent in the electrolyte is c, 0% ≤ c ≤ 40%, which may be, for example, 0% ≤ c ≤ 38%, 5% ≤ c ≤ 35%, 10% ≤ c ≤ 30%, 15% ≤ c ≤ 30%, or 20% ≤ c ≤ 25%, optionally 10% ≤ c ≤ 30%. In some embodiments, c is 20%. The use of the secondary solvent in the foregoing mass fraction can avoid a negative impact on lithium salt dissolution and ion transport while fully implementing functions of oxidation resistance and film formation, prolonging a lifespan of the battery.

In some implementations of this application, the electrolyte further includes a lithium salt, and the lithium salt includes at least one of lithium bis(fluorosulfonyl)imide (LiFSI), lithium hexafluorophosphate (LiPF₆), lithium tetrafluoroborate (LiBF₄), lithium hexafluoroarsenate (LiAsF₆), lithium bis(trifluoromethanesulfonyl)imide (LiTFSI), lithium trifluoromethanesulfonate (LiOTF), lithium difluorophosphate (LiDFP), lithium bis(oxalate)borate (LiBOB), lithium difluoro(oxalato)borate (LiDFOB), lithium difluorobis(oxalato)phosphate, and lithium tetrafluoro(oxalato)phosphate. Therefore, the foregoing lithium salt can decompose on a surface of a negative electrode to form an SEI component rich in inorganic fluorine, which facilitates long-term cycling of an anode-free battery, and has good oxidation stability, which can support cycling at a high voltage, prolonging a lifespan of the battery. In some embodiments, the lithium salt includes lithium bis(fluorosulfonyl)imide.

In some implementations of this application, a molar concentration of the lithium salt in the electrolyte is m, 0.5 M ≤ m ≤ 4 M, which may be, for example, 0.5 M ≤ m ≤ 3.8 M, 1 M ≤ m ≤ 3.5 M, 1.5 M ≤ m ≤ 3 M, or 2 M ≤ m ≤ 2.5 M, optionally 0.8 M ≤ m ≤ 2.4 M. In some embodiments, m is 1.5 M. Therefore, the concentration of the lithium salt within the foregoing range is neither excessively high to affect ion transport performance of the electrolyte, nor excessively low to affect stability of positive and negative electrodes by the electrolyte, which helps prolong a lifespan of the battery.

In some implementations of this application, the electrolyte further includes an additive D (D for short below), and the additive D includes at least one of propanesultone, vinyl sulfate, vinyl sulfite, tris(trimethylsilane)phosphate, tris(trimethylsilane)phosphite, tris(trifluoroethyl)phosphate, tris(trifluoroethyl)phosphite, tris(trimethylsilane)borate, dimethylmaleic anhydride, and 1,4-diisocyanatobutane. Therefore, the foregoing additive mainly helps film formation, and further helps improve stability of positive and negative electrodes of the battery, prolonging a lifespan of the battery.

In some implementations of this application, the electrolyte further includes a co-solvent B, a secondary solvent C, a lithium salt, and an additive D, and in the electrolyte, a sum of a mass of the epoxy compound A substituted with the fluoroalkyl chain, a mass of the co-solvent B, a mass of the secondary solvent C, and a mass of the lithium salt is x, and a mass of the additive D is y, d = y/x, 0% ≤ d ≤ 5%, which may be, for example, 0.2% ≤ d ≤ 4.8%, 0.8% ≤ d ≤ 4.5%, 1% ≤ d ≤ 4.3%, 1.5% ≤ d ≤ 4%, 2% ≤ d ≤ 3.5%, 2.5% ≤ d ≤ 3%, or 2.6% ≤ d ≤ 2.9%, optionally 0.5% ≤ d ≤ 3%. In some embodiments, d is 1%. Therefore, this helps film formation, and further helps improve stability of positive and negative electrodes of the battery, prolonging a lifespan of the battery.

In the foregoing embodiments of this application, the epoxy compound A substituted with the fluoroalkyl chain, the co-solvent B, the secondary solvent C, the lithium salt, and the additive D may be purchased, or may be prepared by common preparation methods in the art. This is not limited in this application. In addition, a method for preparing the foregoing electrolyte provided in this application is not limited in this application. As an example, the foregoing electrolyte may be obtained by mixing all components thereof.

A second aspect of this application provides a battery, including the electrolyte according to the first aspect.

The battery is a battery that is still usable after discharging through activation of an active material by means of charging.

It may be understood that the battery provided in this application may be a lithium metal secondary battery, or may be a lithium-ion battery.

Usually, the battery includes a positive electrode plate, a negative electrode plate, a separator, and an electrolyte. During charging and discharging of the battery, active ions move between the positive electrode plate and the negative electrode plate for intercalation and deintercalation. The separator is provided between the positive electrode plate and the negative electrode plate for separation. The electrolyte is provided between the positive electrode plate and the negative electrode plate for ion conduction.

### [Positive electrode plate]

In a battery, the positive electrode plate usually includes a positive electrode current collector and a positive electrode active substance layer provided on the positive electrode current collector, where the positive electrode active substance layer includes a positive electrode active material.

The positive electrode current collector may be conventional metal foil or a composite current collector (where a metal material may be provided on a polymer substrate to form the composite current collector). As an example, the positive electrode current collector may be aluminum foil.

A specific type of the positive electrode active material is not limited, may be an active material that is known in the art and that can be used for a positive electrode of a battery, and may be selected by a person skilled in the art according to an actual requirement.

The positive electrode material may be, but is not limited to, a positive electrode active material of a lithium-transition metal oxide and/or of lithium-containing phosphate of an olivine structure. In some implementations, the positive electrode active material includes a lithium-transition metal oxide. In some implementations, the lithium-transition metal oxide includes at least one of a lithium-cobalt oxide, a lithium-nickel oxide, a lithium-manganese oxide, a lithium-nickel-manganese oxide, a lithium-nickel-cobalt-manganese oxide, and a lithium-nickel-cobalt-aluminum oxide.

An example of the lithium-transition metal oxide may include, but is not limited to, at least one of a lithium-cobalt oxide (such as LiCoO₂), a lithium-nickel oxide (such as LiNiO₂), a lithium-manganese oxide (such as LiMnO₂ or LiMn₂O₄), a lithium-nickel-cobalt oxide, a lithium-manganese-cobalt oxide, a lithium-nickel-manganese oxide, a lithium-nickel-cobalt-manganese oxide (such as LiNi_{1/3}Co_{1/3}Mn_{1/3}O₂ (which may also be referred to as NCM₃₃₃ for short), LiNi_{0.5}Co_{0.2}Mn_{0.3}O₂ (which may also be referred to as NCM₅₂₃ for short), LiNi_{0.5}Co_{0.25}Mn_{0.25}O₂ (which may also be referred to as NCM₂₁₁ for short), LiNi_{0.6}Co_{0.2}Mn_{0.2}O₂ (which may also be referred to as NCM₆₂₂ for short), LiNi_{0.8}Co_{0.1}Mn_{0.1}O₂ (which may also be referred to as NCM₈₁₁ for short), or LiNi_{0.96}Co_{0.02}Mn_{0.02}O₂ (which may also be referred to as Ni₉₆ for short)), a lithium-nickel-cobalt-aluminum oxide (such as LiNi_{0.85}Co_{0.15}Al_{0.05}O₂), and a modified compound thereof.

An example of the lithium-containing phosphate of the olivine structure may include, but is not limited to, at least one of lithium iron phosphate (such as LiFePO₄ (which may also be referred to as LFP for short)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

A modified compound of each of the foregoing materials may be obtained by performing doping modification and/or surface coating modification on the material.

The positive electrode active substance layer usually further optionally includes a binder, a conductive agent, and another optional auxiliary agent.

As an example, the conductive agent may include one or more of superconducting carbon, acetylene black, carbon black, Ketjen black, carbon dots, carbon nanotubes, Super P (SP), graphene, and carbon nanofibers.

As an example, the binder may include one or more of styrene butadiene rubber (SBR), water-based acrylic resin (water-based acrylic resin), polyvinylidene difluoride (PVDF), polytetrafluoroethylene (PTFE), an ethylene-vinyl acetate copolymer (EVA), polyacrylic acid (PAA), carboxymethyl cellulose (CMC), polyvinyl alcohol (PVA), and polyvinyl butyral (PVB).

### [Negative electrode plate]

In a battery, the negative electrode plate usually includes a negative electrode current collector and a negative electrode active substance layer provided on the negative electrode current collector, where the negative electrode active substance layer includes a negative electrode active material.

The negative electrode current collector may be conventional metal foil or a composite current collector (for example, a metal material may be provided on a polymer substrate to form the composite current collector). As an example, the negative electrode current collector may be copper foil.

When the battery is a lithium-ion battery, a specific type of the negative electrode active material is not limited, may be an active material that is known in the art and that can be used for a negative electrode of a battery, and may be selected by a person skilled in the art according to an actual requirement. As an example, the negative electrode active material may include, but is not limited to, one or more of artificial graphite, natural graphite, hard carbon, soft carbon, a silicon-based material, and a tin-based material. The silicon-based material may be one or more selected from monoatomic silicon, a silicon-oxygen compound (for example, silicon(II) oxide), a silicon-carbon composite, a silicon-nitrogen composite, and a silicon alloy. The tin-based material may be one or more selected from monoatomic tin, a tin-oxygen compound, and a tin alloy. These materials are commercially available.

In some implementations, to further increase energy density of the battery, the negative electrode active material may include a silicon-based material.

The negative electrode active substance layer usually further optionally includes a binder, a conductive agent, and another optional auxiliary agent.

As an example, the conductive agent may include one or more of superconducting carbon, acetylene black, carbon black, Ketjen black, carbon dots, carbon nanotubes, graphene, and carbon nanofibers.

As an example, the binder may include one or more of styrene butadiene rubber (SBR), water-based acrylic resin (water-based acrylic resin), polyvinylidene difluoride (PVDF), polytetrafluoroethylene (PTFE), an ethylene-vinyl acetate copolymer (EVA), polyvinyl alcohol (PVA), and polyvinyl butyral (PVB).

As an example, the another optional auxiliary agent may include a thickener, a dispersant (for example, sodium carboxymethylcellulose CMC-Na), and a PTC thermistor material.

When the battery is a lithium metal secondary battery, a negative electrode material thereof is an elementary lithium metal. The negative electrode material thereof may further include an alloy formed from a lithium metal with various other metal or non-metal elements. The metal elements include tin (Sn), zinc (Zn), aluminum (Al), magnesium (Mg), silver (Ag), gold (Au), gallium (Ga), indium (In), foil (Pt), and the like. The non-metal elements include boron (B), carbon (C), silicon (Si), and the like.

The lithium metal secondary battery provided in the embodiments of this application may alternatively be an anode-free lithium metal battery. In this case, a negative electrode includes only a metal foil current collector, with no lithium metal on a surface thereof. During cycling, only lithium in a positive electrode is intercalated into or deintercalated from the negative electrode side in a lithium metal form.

A separator of the lithium metal secondary battery provided in the embodiments of this application may be, but is not limited to, a polyethylene porous membrane, a polypropylene porous membrane, a polyimide porous membrane, and a composite porous membrane formed from various polymers.

In the lithium metal secondary battery provided in the embodiments of this application, because a non-aqueous electrolyte that is stable to a lithium metal negative electrode and in which oxidative decomposition is significantly inhibited is used, a longer cycle life in a higher voltage range can be achieved.

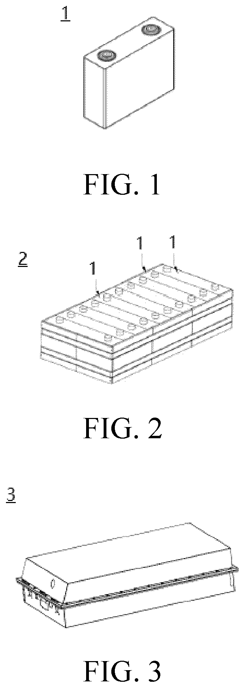

A shape of the battery is not particularly limited in the embodiments of this application, which may be cylindrical, square, or any other shape. FIG. 1 shows a battery 1 of a square structure as an example.

In some implementations, the battery may include outer packaging. The outer packaging may be used to package a positive electrode plate, a negative electrode plate, and an electrolyte.

In some implementations, the outer packaging may include a housing and a cover plate. The housing may include a bottom plate and a side plate connected to the bottom plate, and an accommodating cavity is enclosed and formed by the bottom plate and the side plate. The housing has an opening in communication with the accommodating cavity, and the cover plate can cover the opening to close the accommodating cavity.

The positive electrode plate, the negative electrode plate, and the separator may be wound or laminated to form an electrode assembly. The electrode assembly is packaged in the accommodating cavity. The electrolyte may be an electrolyte solution, and the electrode assembly is immersed in the electrolyte solution. There may be one or more electrode assemblies included in the battery, and a quantity may be adjusted as required.

In some implementations, the outer packaging of the battery may be a hard shell, such as a hard plastic shell, an aluminum shell, or a steel shell.

The outer packaging of the battery may alternatively be a soft package, for example, a pouch-type soft package. A material of the soft package may be plastic, for example, may include one or more of polypropylene (PP), polybutylene terephthalate (PBT), and polybutylene succinate (PBS).

In some implementations, the battery may be assembled into a battery module. There may be a plurality of batteries included in the battery module, and a specific quantity may be adjusted based on application and capacity of the battery module.

FIG. 2 shows a battery module 2 as an example. Refer to FIG. 2. In the battery module 2, a plurality of batteries 1 may be sequentially arranged in a length direction of the battery module 2. Certainly, the plurality of batteries 1 may alternatively be arranged in any other manner. The plurality of batteries 1 may further be secured by a fastener.

The battery module 2 may further include an outer shell with accommodating space, and the plurality of secondary batteries 1 are accommodated in the accommodating space. In some implementations, the battery module may further be assembled into a battery pack, and a quantity of battery modules included in the battery pack may be adjusted based on application and capacity of the battery pack.

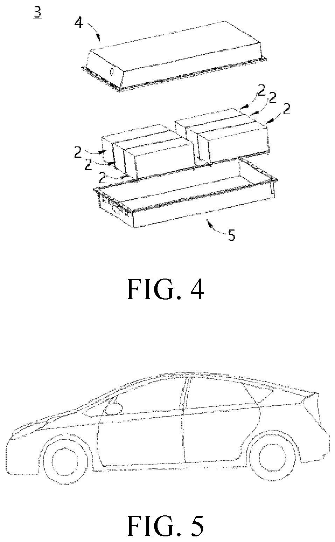

FIG. 3 and FIG. 4 show a battery pack 3 as an example. Refer to FIG. 3 and FIG. 4. The battery pack 3 may include a battery box and a plurality of battery modules 2 disposed in the battery box. The battery box includes an upper box body 4 and a lower box body 5. The upper box body 4 can cover the lower box body 5 to form closed space for accommodating the battery modules 2. The plurality of battery modules 2 may be arranged in the battery box in any manner.

### [Power-consuming device]

An embodiment of this application further provides a power-consuming device. The power-consuming device includes the battery, and the battery is configured to provide electric energy. Specifically, the battery may be used as a power source for the power-consuming device, and may also be used as an energy storage unit for the power-consuming device. The power-consuming device may be, but is not limited to, a mobile device (such as a mobile phone or a notebook computer), an electric vehicle (such as a pure electric vehicle, a hybrid electric vehicle, a plug-in hybrid electric vehicle, an electric bicycle, an electric scooter, an electric golf cart, or an electric truck), an electric train, a ship and a satellite, or an energy storage system.

FIG. 5 shows a power-consuming device as an example. The power-consuming device is a pure electric vehicle, a hybrid electric vehicle, or a plug-in hybrid electric vehicle.

As another example, the power-consuming device may be a mobile phone, a tablet computer, or a notebook computer. The power-consuming device usually needs to be light and thin, and a battery may be used as a power source.

To make the technical problems to be resolved by the embodiments of this application, the technical solutions, and the beneficial effects clearer, detailed description is further made below with reference to embodiments and the accompanying drawings. It is clear that the described examples are merely some rather than all of the embodiments of this application. The following description of at least one exemplary embodiment is actually merely illustrative, and is not intended to limit this application and application thereof. All other embodiments obtained by a person of ordinary skill in the art based on the embodiments of this application without making creative efforts shall fall within the protection scope of this application.

### Embodiment 1

### 1. Preparation of an electrolyte

The epoxy compound A-1 substituted with the fluoroalkyl chain, the co-solvent B-5, and the secondary solvent C-1 were fully mixed at a mass ratio of 6:2:2 to form a solvent stock solution. Then, 1.4025 g of lithium bis(fluorosulfonyl)imide was taken and added to 5 mL of the solvent stock solution, and fully stirred, to form a colorless transparent electrolyte of lithium bis(fluorosulfonyl)imide with a concentration of 1.5 M.

### 2. Preparation of a liquid lithium metal secondary battery

Preparation of a positive electrode: The positive electrode active material lithium nickel manganese cobalt oxide LiNi_{0.8}Co_{0.1}Mn_{0.1}O₂ (NCM₈₁₁) (NMC), the conductive agent acetylene black, and the binder PVDF were mixed at a mass ratio of 98:1:1. The solvent N-methylpyrrolidone (NMP) was added and stirred until the mixture was homogeneous, to obtain a positive electrode slurry (with a solid content of 70%). Positive electrode current collector aluminum foil was coated uniformly with the positive electrode slurry on both surfaces at a loading of 25 mg/cm², dried at room temperature, then transferred to an oven for further drying, and then cut into a rectangular positive electrode plate of 40 mm * 50 mm.

Separator: A polyethylene porous membrane was selected and cut into a 45 mm * 55 mm rectangle for use.

Preparation of a negative electrode: 12 µm copper foil was covered with 50 µm lithium foil by roller pressing, and then cut into a rectangular negative electrode plate of 41 mm * 51 mm.

Battery assembly: One piece of cut positive electrode and two pieces of cut negative electrodes were taken and matched, separated by using the foregoing separator provided therebetween, and wrapped in an aluminum plastic film bag to form a laminated dry cell. 0.3 g of the foregoing prepared electrolyte was injected. The aluminum plastic film bag was encapsulated by vacuum hot pressing, and left to stand at room temperature for at least 6 h, to obtain the liquid lithium metal secondary battery. The laminated battery prepared by this method has a rated capacity of 140 mAh.

Electrolytes in Embodiment 2 to Embodiment 31 are the same as that in Embodiment 1 except that parameters are different (refer to Table 1).

### Embodiment 32

Propanesultone (the additive D), which was 0.5% of the electrolyte in mass, was added to the electrolyte prepared in Embodiment 1, and fully stirred to form a colorless transparent electrolyte. The preparation of a liquid lithium metal secondary battery is the same as that in Embodiment 1.

Electrolytes in Embodiment 33 to Embodiment 37 are the same as that in Embodiment 32 except that parameters are different (refer to Table 1).

### Comparative Example 1

The solvent B-5 and the solvent C-1 were mixed uniformly in equal mass to form a solvent stock solution. 1.4025 g of lithium bis(fluorosulfonyl)imide was taken and added to 5 mL of the stock solution, and fully stirred, to form a colorless transparent electrolyte of lithium bis(fluorosulfonyl)imide with a concentration of 1.5 M. The preparation of a liquid lithium metal secondary battery is the same as that in Embodiment 1.

In other words, Comparative Example 1 is the same as Embodiment 1 except that the epoxy compound substituted with the fluoroalkyl chain is not added.

### Comparative Example 2

1.4025 g of lithium bis(fluorosulfonyl)imide was taken and added to 5 mL of dimethoxyethane solvent (a conventional ether electrolyte), and fully stirred, to form a colorless transparent electrolyte. The method for preparing a liquid lithium metal secondary battery is the same as that in Embodiment 1.

### Comparative Example 3

Ethylene carbonate and methyl ethyl carbonate were taken and mixed uniformly at a mass ratio of 3:7 to form a solvent stock solution. Then, 0.76 g of lithium hexafluorophosphate was taken and added to the solvent stock solution, and fully stirred, to form a colorless transparent electrolyte. The method for preparing a liquid lithium metal secondary battery is the same as that in Embodiment 1.

The composition of the electrolytes in Embodiment 1 to Embodiment 37 and Comparative Example 1 to Comparative Example 3 in this application is shown in Table 1.

**Table 1**

| Serial number | Epoxy compound A substituted with a fluoroalkyl chain | Co-solvent B | Secondary solvent C | Additive D | a | b | c | d | Lithium salt | Molar concentration of the lithium salt (M) |
|---|---|---|---|---|---|---|---|---|---|---|
| Embodiment 1 | A-1 | B-5 | C-1 | - | 60% | 20% | 20% | 0% | LiFSI | 1.5 |
| Embodiment 2 | A-1 | B-5 | C-1 | - | 40% | 30% | 30% | 0% | LiFSI | 1.5 |
| Embodiment 3 | A-1 | B-5 | C-1 | - | 80% | 10% | 10% | 0% | LiFSI | 1.5 |
| Embodiment 4 | A-1 | B-5 | C-1 | - | 20% | 40% | 40% | 0% | LiFSI | 1.5 |
| Embodiment 5 | A-1 | B-5 | C-1 | - | 100% | 0% | 0% | 0% | LiFSI | 1.5 |
| Embodiment 6 | A-1 | B-5 | C-1 | - | 60% | 20% | 20% | 0% | LiFSI | 0.3 |
| Embodiment 7 | A-1 | B-5 | C-1 | - | 60% | 20% | 20% | 0% | LiFSI | 6 |
| Embodiment 8 | A-1 | B-5 | C-1 | - | 60% | 20% | 20% | 0% | LiFSI | 0.5 |
| Embodiment 9 | A-1 | B-5 | C-1 | - | 60% | 20% | 20% | 0% | LiFSI | 4 |
| Embodiment 10 | A-1 | B-5 | C-1 | - | 60% | 20% | 20% | 0% | LiFSI | 0.8 |
| Embodiment 11 | A-1 | B-5 | C-1 | - | 60% | 20% | 20% | 0% | LiFSI | 2.4 |
| Embodiment 12 | A-1 | B-5 | C-1 | - | 60% | 20% | 20% | 0% | LiFSI | 1.2 |
| Embodiment 13 | A-1 | B-5 | C-1 | - | 60% | 20% | 20% | 0% | LiFSI | 1.8 |
| Embodiment 14 | A-7 | B-5 | C-1 | - | 60% | 20% | 20% | 0% | LiFSI | 1.5 |
| Embodiment 15 | A-8 | B-5 | C-1 | - | 60% | 20% | 20% | 0% | LiFSI | 1.5 |
| Embodiment 16 | A-9 | B-5 | C-1 | - | 60% | 20% | 20% | 0% | LiFSI | 1.5 |
| Embodiment 17 | A-10 | B-5 | C-1 | - | 60% | 20% | 20% | 0% | LiFSI | 1.5 |
| Embodiment 18 | A-14 | B-5 | C-1 | - | 60% | 20% | 20% | 0% | LiFSI | 1.5 |
| Embodiment 19 | A-15 | B-5 | C-1 | - | 60% | 20% | 20% | 0% | LiFSI | 1.5 |
| Embodiment 20 | A-16 | B-5 | C-1 | - | 60% | 20% | 20% | 0% | LiFSI | 1.5 |
| Embodiment 21 | A-1 | Dimethoxypropane | C-1 | - | 60% | 20% | 20% | 0% | LiPF₆ | 1.5 |
| Embodiment 22 | A-1 | Diethoxyethane | C-1 | - | 60% | 20% | 20% | 0% | LiFSI | 1.5 |
| Embodiment 23 | A-1 | B-2 | C-1 | - | 60% | 20% | 20% | 0% | LiFSI | 1.5 |
| Embodiment 24 | A-1 | Dimethoxyethane | C-1 | - | 60% | 20% | 20% | 0% | LiFSI | 1.5 |
| Embodiment 25 | A-1 | B-23 | C-1 | - | 60% | 20% | 20% | 0% | LiFSI | 1.5 |
| Embodiment 26 | A-1 | B-31 | C-1 | - | 60% | 20% | 20% | 0% | LiFSI | 1.5 |
| Embodiment 27 | A-1 | B-5 | C-2 | - | 60% | 20% | 20% | 0% | LiFSI | 1.5 |
| Embodiment 28 | A-1 | B-5 | Fluorobenzene | - | 60% | 20% | 20% | 0% | LiFSI | 1.5 |
| Embodiment 29 | A-1 | B-5 | Decafluoropentane | - | 60% | 20% | 20% | 0% | LiFSI | 1.5 |
| Embodiment 30 | A-1 | B-5 | C-1 | - | 60% | 20% | 20% | 0% | LiPF₆ | 1.5 |
| Embodiment 31 | A-1 | B-5 | C-1 | - | 60% | 20% | 20% | 0% | LiDFOB | 1.5 |
| Embodiment 32 | A-1 | B-5 | C-1 | Propanesultone | 60% | 20% | 20% | 0.5% | LiFSI | 1.5 |
| Embodiment 33 | A-1 | B-5 | C-1 | Propanesultone | 60% | 20% | 20% | 1% | LiFSI | 1.5 |
| Embodiment 34 | A-1 | B-5 | C-1 | Propanesultone | 60% | 20% | 20% | 3% | LiFSI | 1.5 |
| Embodiment 35 | A-1 | B-5 | C-1 | Propanesultone | 60% | 20% | 20% | 5% | LiFSI | 1.5 |
| Embodiment 36 | A-1 | B-5 | C-1 | Vinyl sulfate | 60% | 20% | 20% | 1% | LiFSI | 1.5 |
| Embodiment 37 | A-1 | B-5 | C-1 | Tris(trimethylsilane)phosphate | 60% | 20% | 20% | 1% | LiFSI | 1.5 |
| Comparative Example 1 | - | B-5 | C-1 | - | 0% | 50% | 50% | 0% | LiFSI | 1.5 |
| Comparative Example 2 | - | Dimethoxyethane | - | - | 0% | 100% | 0% | 0% | LiFSI | 1.5 |
| Comparative Example 3 | | Ethylene carbonate:methyl ethyl carbonate = 3:7 | | | - | | | | LiPF₆ | 1 |

In Table 1, C-1 is 1,1,2,2-tetrafluoroethyl-2,2,3,3-tetrafluoropropylether, and C-2 is 1,2-bis(1,1,2,2-tetrafluoroethoxy)ethane. For numbers of the substances of the epoxy compound A substituted with the fluoroalkyl chain and the co-solvent B, refer to the foregoing description. In addition, A-1 is purchased from Energy Chemical, A-7, A-8, A-9, and A-16 are purchased from Enamine, A-10 is purchased from FCH Group, A-14 is purchased from Merck, and A-15 is purchased from Chemieliva Pharmaceutical Co., Ltd, Chongqing.

### Performance tests

### 1. LSV test on a Li-Al half cell for oxidation stability of the electrolyte

50 µm copper-coated lithium metal foil as a negative electrode and aluminum foil as a positive electrode were cut into 1 cm² circular pieces, with a polyethylene porous membrane as a separator, and 20 µL of the electrolyte prepared in Embodiment 1 to Embodiment 37 and Comparative Example 1 to Comparative Example 3 were injected, to form a button cell. The sweep voltammetry curve (LSV) test was performed by using a Solartron electrochemical workstation at a scan rate of 5 mV/s within a voltage interval from an open-circuit voltage to 6 V. A current response of the cell was recorded. A voltage corresponding to a current density of 10 µA/cm² is taken as a critical voltage value for oxidation stability of the electrolyte.

### 2. Cycle life test on the liquid lithium metal secondary battery

The laminated cells prepared in Embodiment 1 to Embodiment 37 and Comparative Example 1 to Comparative Example 3 were charged at a 0.2C (that is, 28 mA) rate and discharged at a 1C (that is, 140 mA) rate at an ambient temperature set to 25°C for a plurality of cycles. Cut-off voltages for charging and discharging were respectively set to 4.5 V and 2.8 V, and a charging process was carried out by using a constant current-constant voltage charging method. Specifically, the cells were charged at a constant current 0.2C until the cut-off voltage 4.5 V was reached, and then changed at a constant voltage 4.5 V until the current decayed to 0.1C (that is, 14 mAh). When discharge capacity decays to 80% of first-circle discharge capacity, the battery lifespan is considered cut-off.

Test results of the electrolytes and batteries in Embodiment 1 to Embodiment 37 and Comparative Example 1 to Comparative Example 3 are shown in Table 2.

**Table 2**

| | Oxidation stability of an electrolyte (V) | Cycle life of a battery (cycles) |
|---|---|---|
| Embodiment 1 | 5.5 | 657 |
| Embodiment 2 | 5.4 | 565 |
| Embodiment 3 | 5.6 | 563 |
| Embodiment 4 | 5.3 | 459 |
| Embodiment 5 | 5.7 | 444 |
| Embodiment 6 | 4.8 | 376 |
| Embodiment 7 | 5.7 | 389 |
| Embodiment 8 | 5.0 | 424 |
| Embodiment 9 | 5.6 | 445 |
| Embodiment 10 | 5.2 | 500 |
| Embodiment 11 | 5.5 | 503 |
| Embodiment 12 | 5.5 | 582 |
| Embodiment 13 | 5.5 | 690 |
| Embodiment 14 | 5.5 | 658 |
| Embodiment 15 | 5.5 | 645 |
| Embodiment 16 | 5.5 | 566 |
| Embodiment 17 | 5.5 | 470 |
| Embodiment 18 | 5.5 | 433 |
| Embodiment 19 | 5.5 | 421 |
| Embodiment 20 | 5.5 | 402 |
| Embodiment 21 | 5.2 | 644 |
| Embodiment 22 | 5.3 | 631 |
| Embodiment 23 | 5.5 | 643 |
| Embodiment 24 | 5.1 | 549 |
| Embodiment 25 | 5.5 | 455 |
| Embodiment 26 | 5.5 | 438 |
| Embodiment 27 | 5.5 | 644 |
| Embodiment 28 | 5.5 | 430 |
| Embodiment 29 | 5.5 | 461 |
| Embodiment 30 | 5.5 | 471 |
| Embodiment 31 | 5.5 | 519 |
| Embodiment 32 | 5.5 | 658 |
| Embodiment 33 | 5.5 | 660 |
| Embodiment 34 | 5.5 | 659 |
| Embodiment 35 | 5.5 | 656 |
| Embodiment 36 | 5.5 | 658 |
| Embodiment 37 | 5.5 | 658 |
| Comparative Example 1 | 4.4 | 419 |
| Comparative Example 2 | 3.8 | 21 |
| Comparative Example 3 | 4.5 | 45 |

It can be found according to Embodiment 1 to Embodiment 5 that when a mass ratio of A to B to C is 6:2:2, the electrolyte has good oxidation stability, and the battery has a long cycle life. This is because at this ratio, key effects of all the components can be effectively achieved, and defects of all the components can be avoided, resulting in a good effect of prolonging the cycle life of the battery.

It can be found according to Embodiment 1 and Embodiment 6 to Embodiment 13 that when the lithium salt is 1.5 M, the electrolyte has good oxidation stability, and the battery has a long cycle life. In this case, the electrolyte has moderate viscosity and high ionic conductivity.

It can be found by comparing Embodiment 1 with Embodiment 14 to Embodiment 20 that when the epoxy compound A substituted with the fluoroalkyl chain is A-1, A-7, and A-8, the electrolyte has good oxidation stability, and the battery has a long cycle life. This is because their structures can improve both stability of the positive and negative electrodes and a capability of dissolving the lithium salt.

It can be found by comparing Embodiment 1 with Embodiment 21 to Embodiment 26 that when the co-solvent B is dimethoxypropane, diethoxyethane, B-2, and B-5, the electrolyte has good oxidation stability, and the battery has a long cycle life.

It can be found by comparing Embodiment 1 with Embodiment 27 to Embodiment 29 that when the secondary solvent C is C-1 and C-2, the electrolyte has good oxidation stability, and the battery has a long cycle life.

It can be found by comparing Embodiment 1 with Embodiment 30 and Embodiment 31 that when the lithium salt is lithium bis(fluorosulfonyl)imide, the electrolyte has good oxidation stability, and the battery has a long cycle life.

It can be found by comparing Embodiment 1 with Embodiment 32 to Embodiment 37 that when an addition amount of the additive D is 1%, the electrolyte has good oxidation stability, the battery has a long cycle life, and the addition amount of the additive has a small effect on performance of the electrolyte and the battery.

It can be found by comparing Embodiment 1 with Comparative Example 1 to Comparative Example 3 that the addition of the epoxy compound A substituted with the fluoroalkyl chain significantly improves oxidation resistance of the electrolyte and a cycle life of the cell, and the obtained electrolyte is significantly improved compared with the conventional ether electrolyte (Comparative Example 2) and the existing electrolyte of a commercial lithium-ion battery (Comparative Example 3).

Finally, it should be noted that: the foregoing embodiments are merely used for describing the technical solutions of this application, but are not intended to limit this application. Although this application is described in detail with reference to the foregoing embodiments, a person of ordinary skill in the art should understand that modifications may still be made to the technical solutions described in the foregoing embodiments, or equivalent replacements may still be made to some or all of the technical features therein; and these modifications or replacements do not cause the essence of corresponding technical solutions to depart from the scope of the technical solutions in the embodiments of this application, and shall fall within the scope of the claims and specification of this application. Especially, as long as there is no structural conflict, the technical features mentioned in the embodiments may be combined in any way. This application is not limited to the particular embodiments disclosed herein, but includes all technical solutions that fall within the scope of the claims.

## Claims

1. An electrolyte, applicable to a lithium metal secondary battery, the electrolyte comprising a lithium salt and a solvent, wherein the solvent comprises an epoxy compound substituted with a fluoroalkyl chain.

2. The electrolyte according to claim 1, wherein the epoxy compound substituted with the fluoroalkyl chain comprises at least one of molecules of structures shown in formula I to formula VII: 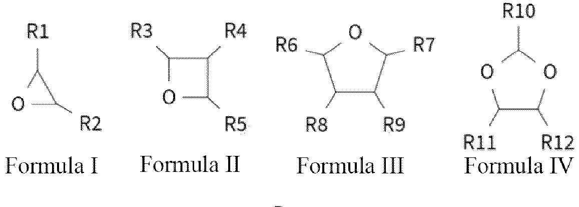 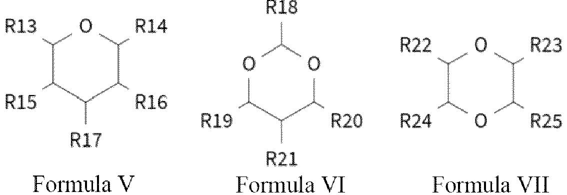 wherein R1 to R25 are each independently a hydrogen atom or a fluoroalkyl group containing 1 to 10 carbon atoms, and at least one of R1 to R25 is a fluoroalkyl group containing 1 to 10 carbon atoms.

3. The electrolyte according to claim 1, wherein a number of carbon atoms in the fluoroalkyl chain in the epoxy compound substituted with the fluoroalkyl chain is not greater than 7.

4. The electrolyte according to claim 1, wherein in the epoxy compound substituted with the fluoroalkyl chain, a number of fluorine atoms in the fluoroalkyl chain is m, and a number of hydrogen atoms in the fluoroalkyl chain is n, m/(m + n) ≥ 50%; and/or
the epoxy compound in the epoxy compound substituted with the fluoroalkyl chain is a three-membered ring, a four-membered ring, a five-membered ring, or a six-membered ring.

5. The electrolyte according to claim 1, wherein the epoxy compound substituted with the fluoroalkyl chain comprises at least one of molecules of structures shown in formula A-1 to formula A-16:

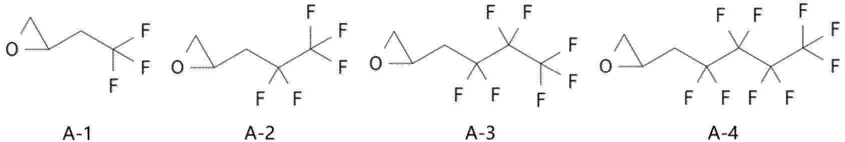

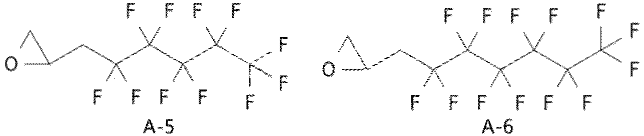

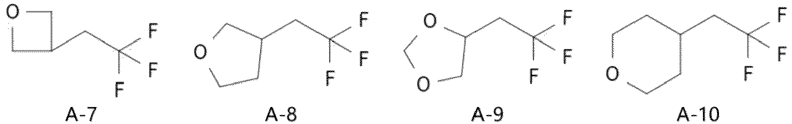

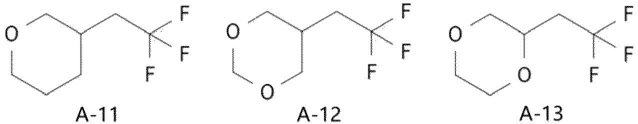

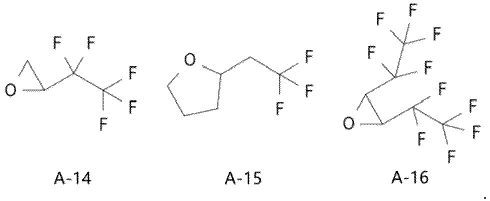

6. The electrolyte according to claim 1, wherein the epoxy compound substituted with the fluoroalkyl chain comprises at least one of molecules of structures shown in the following formulas:

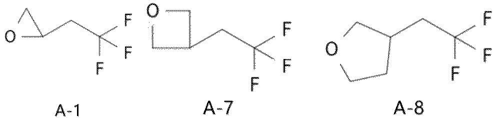

7. The electrolyte according to any one of claims 1 to 6, wherein a percentage by mass of the epoxy compound substituted with the fluoroalkyl chain in the electrolyte is a, 20% ≤ a ≤ 100%, optionally 40% ≤ a ≤ 80%.

8. The electrolyte according to any one of claims 1 to 6, wherein the electrolyte further comprises at least one of a co-solvent, a secondary solvent, a lithium salt, and an additive.

9. The electrolyte according to any one of claims 1 to 6, wherein the electrolyte further comprises a co-solvent, and the co-solvent comprises at least one of carboxylate, carbonate, monoether, diol ether, acetal ether, cyclic ether, fluoroester, and fluoroether.

10. The electrolyte according to claim 9, wherein the fluoroester comprises at least one of fluoroethylene carbonate, difluoroethylene carbonate, methyl trifluoroethyl carbonate, ethyl trifluoroethyl carbonate, bis(2,2,2-trifluoroethyl) carbonate, methyl 2,2,2-trifluoroacetate, and ethyl 2,2,2-trifluoroacetate; and/or
the fluoroether comprises at least one of molecules of structures shown in formula B-1 to formula B-30:

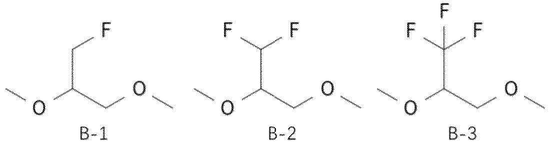

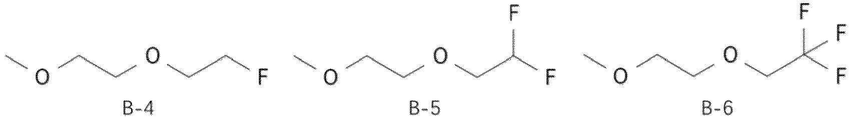

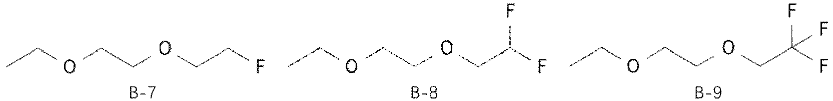

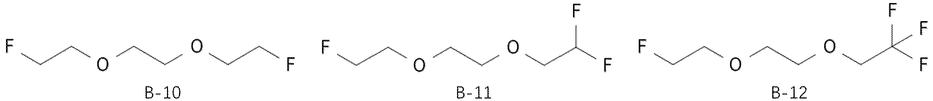

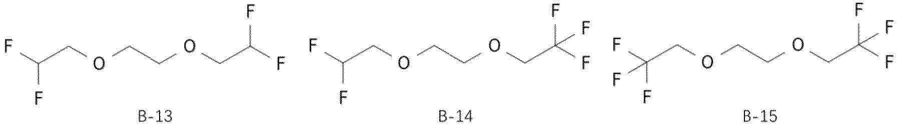

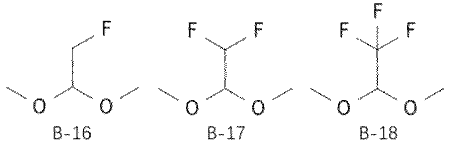

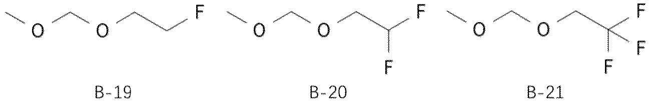

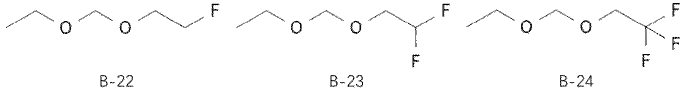

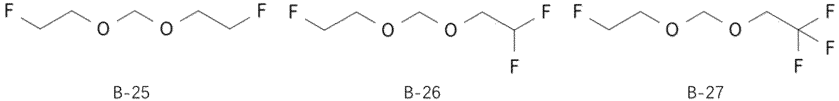

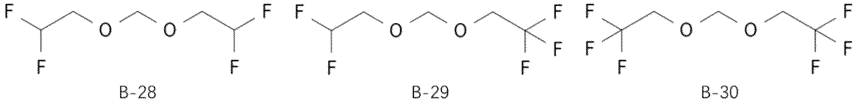

11. The electrolyte according to claim 9, wherein the co-solvent comprises at least one of dimethoxypropane, diethoxyethane,

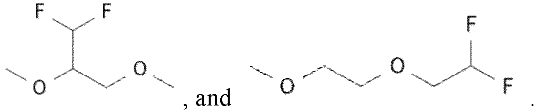

12. The electrolyte according to any one of claims 1 to 6, wherein the electrolyte further comprises a secondary solvent, and the secondary solvent comprises at least one of fluoroether, a fluoroaryl solvent, and fluoroalkane.

13. The electrolyte according to any one of claims 1 to 6, wherein the electrolyte further comprises a secondary solvent, and the secondary solvent comprises at least one of fluorobenzene, p-difluorobenzene, m-difluorobenzene, o-difluorobenzene, trifluorotoluene, trifluoromethoxybenzene, decafluoropentane, 1,1,2,2-tetrafluoroethyl-2,2,3,3-tetrafluoropropylether, 1,2-bis(1,1,2,2-tetrafluoroethoxy)ethane, bis(2,2,2-trifluoroethyl) ether, 1,1,2,3,3,3-hexafluoropropyl ethyl ether, 1H,1H,5H-octafluoropentyl-1,1,2,2-tetrafluoroethyl ether, ethyl trifluoromethyl ether, difluoromethyl-2,2,3,3,3-pentafluoropropyl ether, heptafluoropropyl-1,2,2,2-tetrafluoroethyl ether, difluoromethyl 2,2,3,3-tetrafluoropropyl ether, perfluoroisopropyl methyl ether, 1,1,2,2-tetrafluoroethyl-2,2,2-trifluoroethyl ether, ethyl-1,1,2,2-tetrafluoroethyl ether, ethyl-2,2,2-tetrafluoroethyl ether, and bis(1,1,2,2-tetrafluoroethyl) ether.

14. The electrolyte according to any one of claims 1 to 6, wherein the electrolyte further comprises a secondary solvent, and the secondary solvent comprises at least one of 1,1,2,2-tetrafluoroethyl-2,2,3,3-tetrafluoropropylether and 1,2-bis(1,1,2,2-tetrafluoroethoxy)ethane.

15. The electrolyte according to any one of claims 1 to 6, wherein the electrolyte further comprises an additive, and the additive comprises at least one of propanesultone, vinyl sulfate, vinyl sulfite, tris(trimethylsilane)phosphate, tris(trimethylsilane)phosphite, tris(trifluoroethyl)phosphate, tris(trifluoroethyl)phosphite, tris(trimethylsilane)borate, dimethylmaleic anhydride, and 1,4-diisocyanatobutane.

16. The electrolyte according to any one of claims 1 to 6, wherein the electrolyte further comprises a lithium salt, and a molar concentration of the lithium salt in the electrolyte is m, 0.5 M ≤ m ≤ 4 M, optionally 0.8 M ≤ m ≤ 2.4 M.

17. The electrolyte according to any one of claims 1 to 6, wherein the electrolyte further comprises a co-solvent, and a percentage by mass of the co-solvent in the electrolyte is b, 0% ≤ b ≤ 40%, optionally 10% ≤ b ≤ 30%.

18. The electrolyte according to any one of claims 1 to 6, wherein the electrolyte further comprises a secondary solvent, and a percentage by mass of the secondary solvent in the electrolyte is c, 0% ≤ c ≤ 40%, optionally 10% ≤ c ≤ 30%.

19. The electrolyte according to any one of claims 1 to 6, wherein the electrolyte further comprises a co-solvent, a secondary solvent, a lithium salt, and an additive, and in the electrolyte, a sum of a mass of the epoxy compound substituted with the fluoroalkyl chain, a mass of the co-solvent, a mass of the secondary solvent, and a mass of the lithium salt is x, and a mass of the additive is y, d = y/x, 0% ≤ d ≤ 5%, optionally 0.5% ≤ d ≤ 3%.

20. A battery, comprising the electrolyte according to any one of claims 1 to 19.

21. A power-consuming device, comprising the battery according to claim 20, wherein the battery is configured to provide electric energy.
